(19) **Europäisches Patentamt European Patent Office Office européen des brevets**

(11) **EP 2 585 788 B1**

(12) **EUROPEAN PATENT SPECIFICATION**

(45) Date of publication and mention of the grant of the patent:
**28.05.2014 Bulletin 2014/22**

(51) Int Cl.:
*F41G 3/06* (2006.01)    *G01S 17/10* (2006.01)
*G01S 7/481* (2006.01)    *G01S 7/487* (2006.01)

(21) Application number: **11751931.4**

(22) Date of filing: **22.06.2011**

(86) International application number:
**PCT/IB2011/001422**

(87) International publication number:
**WO 2011/161527 (29.12.2011 Gazette 2011/52)**

(54) **LASER RANGEFINDER MOUNTABLE ON A HAND-HELD WEAPON TO CALCULATE TARGET DISTANCE AND ASSOCIATED METHOD OF OPERATION**

AUF EINER HANDFEUERWAFFE ANBRINGBARER LASERBEREICHSFINDER ZUR BERECHNUNG VON ZIELABSTÄNDEN UND BETRIEBSVERFAHREN DAFÜR

TÉLÉMÈTRE À LASER POUVANT ÊTRE MONTÉ SUR UNE ARME DE POCHE POUR CALCULER UNE DISTANCE CIBLE ET PROCÉDÉ DE FONCTIONNEMENT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2010 IT TV20100091**

(43) Date of publication of application:
**01.05.2013 Bulletin 2013/18**

(73) Proprietor: **SELEX Galileo S.p.A.**
**Campi Bisenzio (IT)**

(72) Inventors:
• **SANTINI, Nicola**
**I-51039 Quarrata (IT)**
• **MAESTRINI, Mauro**
**I-00131 Roma (IT)**

(74) Representative: **Zamprogno, Bruno et al**
**STUDIO TORTA S.p.A.**
**Via Viotti, 9**
**10121 Torino (IT)**

(56) References cited:
WO-A1-00/77540    US-A- 3 900 261
US-A1- 2010 067 587    US-B1- 6 587 185

**Description**

TECHNICAL FIELD

The present invention relates to a LASER rangefinder mountable on a hand-held weapon to calculate target distance and the associated method of operation.

BACKGROUND ART

As is known, the LASER (acronym of Light Amplification by Stimulated Emission of Radiation) rangefinder is a device for measuring distances, configured to emit a LASER pulse train towards a target, measure the flight time of each LASER pulse from the moment of emission to the moment of its reception and calculate the distance of the target based on the measured flight time.

Known LASER rangefinders comprise: an emitter stage provided with a pulse emission source; a receiver stage provided with an optoelectronic receiver device able to generate an electrical distance signal in output for each LASER pulse received; an optical unit provided with two lenses arranged coplanar and spaced apart from each other, with a first lens coupled to the pulse emission source so that the emitted pulse passes through it, while the second lens is coupled to the receiver stage so that the pulse reflected by the target passes through it; and, lastly, a processing stage, which is configured to process the electrical distance signal by means of a method of calculation in order to determine the target distance.

The structure and circuit architecture of the above-described rangefinder as a whole proves to be particularly bulky and consequently renders the rangefinder unsuitable for being mounted on hand-held weapons, in particular on grenade-launchers where, as is known, it is necessary to contain the bulk within a predetermined limit, beyond which manoeuvrability of the weapon carrying the rangefinder becomes difficult.

In order to contain the bulk of the LASER rangefinder below an acceptable limit to allow it to be mounted on a hand-held weapon, it has been thought to simplify the rangefinder's optical unit by eliminating one of the two lenses, using the remaining lens for both the emission and the reception of pulses and adding an optical prism to deviate the pulse emitted by the emitter stage to the lens and to route the pulse received from the same lens to the optoelectronic receiver device.

However, if on the one hand the elimination of a lens and the introduction of the optical prism, hereafter indicated as "optical splitter", considerably reduces the overall bulk of the rangefinder and makes it suitable for mounting on a hand-held weapon, on the other hand this architecture causes a temporary state of saturation in the receiver stage on every pulse emission, which does not allow the target distance to be calculated using the currently known methods of calculation unless the measurement times are lengthened, this latter situation being unacceptable when it is necessary to determine the distance of a moving target.

In particular, in use, a fraction of the energy of the pulse emitted by the emitter stage is incorrectly deviated by the optical splitter to the receiver stage. Since the power of the emitted pulse is of the order of tens of Watts, typically 40 Watts, and the receiver stage is configured to receive pulses having power of the order of nanowatts, the fraction of energy of the emitted pulse deviated to the receiver stage is sufficient cause the optoelectronic receiver device to initially enter a saturation condition, at the end of which a series of amplitude and/or frequency variations arise in the distance signal that render the calculation of the distance by means of the method of calculation invalid.

In detail, for each emission, the method of calculation samples the electrical distance signal generated in output from the receiver stage at predetermined time intervals ti. Following the sampling, for each pulse received, the method determines a vector Q1 comprising N sample values $v(i)$ of the measured signal, where index i identifying the i'th sample value $v(i)$ of vector Q1 is associated with the sampling time ti of the sample. Calculation of the distance is based on a comparison between the sample value $v(i)$ and the noise determined in a neighbourhood of the sample value.

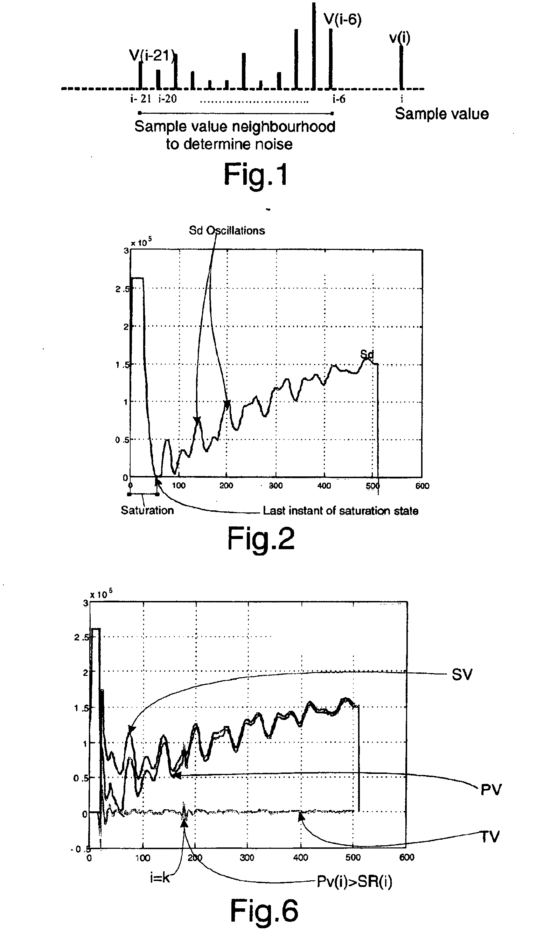

Figure 1 shows an example of N sample values $v(i)$ associated with an electrical distance signal. In the example shown, for each sample value $v(i)$ of vector Q1, the method of calculation considers a predetermined number of samples within the neighbourhood of the sample value in question. In the case in point, for each sample value $v(i)$, the method of calculation considers a neighbourhood comprising 16 samples that precede the sample value $v(i)$, namely sample values in the interval $v(i-21),...,v(i-6)$.

For each sample value $v(i)$ of vector Q1, the method of calculation determines a standard deviation $\sigma(i)$ based, in the example in Figure 1, on the sample values included between $v(i-21)$ and $v(i-6)$, and calculates a corresponding detection threshold $S(i)$ on the basis of the calculated standard deviation $\sigma(i)$.

In the case in point, in the example shown in Figure 1, the standard deviation $\sigma(i)$ is calculated using the following relation:

a)

$$\sigma(i) = \sqrt{\frac{\sum_{j=i-21}^{i-6} \left(v(j) - vm(j)\right)^2}{21-6+1}}$$

where v(j) and vm(j) are respectively the sample value of the signal acquired at the j'th instant and the mean value of the sample values v(i) in the neighbourhood between v(i-6) and v(i-21).

Regarding the detection threshold S(i), this is calculated using the following relation:

b)

$$S(i) = \sigma(i) \cdot \alpha(i) + vm(i)$$

where the coefficient $\alpha$(i) has a predetermined value typically within the range of 5 to 8.

The method of calculation performs the following comparison $v(i) > S(i)$ and in the case where this comparison gives a positive result, it determines the target as being located at the i'th position.

Lastly, the method calculates the distance on the basis of the time instant associated with the i'th index of the identified sample value v(i).

The above-described method of calculation is not able to determine the target distance when temporary saturation of the receiver stage occurs.

In particular, with reference to Figure 2, an example is shown of the electrical distance signal generated by the optoelectronic receiver device in the absence of a target, consequently obtained from just the emitted pulse, incorrectly deviated by the optical splitter, where both the temporary state of saturation in the initial part of the electrical distance signal and the oscillations that develop in the signal following the state of saturation are visible.

The above-specified relation a) is inapplicable to the electrical distance signal in the saturation condition as the standard deviation will be strongly correlated to the signal's oscillations and not to the noise.

In other words, the presence of oscillations in the electrical distance signal due to the temporary saturation state of the receiver stage renders the comparison performed by method of calculation invalid and consequently does not allow the distance to be calculated.

WO 0 077 540 A1 discloses a reflected laser pulse which is received by a detector which is a single component of a detector array. The reflected laser pulse is then amplified by an amplifier and sent through a matched filter to optimize the signal-to-noise ratio. A data sampler takes samples of the reflected laser pulse and stores the data samples within a temporary data storage. A comparator compares each data sample in the temporary data storage to a predetermined threshold constant to determine if the threshold constant has been exceeded. When the threshold constant is exceeded, the data from the temporary data storage is sent to a buffer where it is held while an analog-to-digital converter digitizes the samples for use by a computer in identifying an object and determining the location of the detected object. The identity and location of the detected object are displayed on a display device.

DISCLOSURE OF INVENTION

The object of the present invention is therefore that of making a LASER rangefinder for hand-held weapons having a single lens and an optical splitter, which is able to calculate target distance independently of the saturation condition on its receiver stage.

According to the present invention, a hand-held weapon is made in accordance with that defined in claim 5 and preferably, but not necessarily, in any of the claims directly or indirectly dependent upon claim 5.

According to the present invention, a LASER rangefinder for hand-held weapons is made in accordance with that defined in claim 1 and preferably, but not necessarily, in any of the claims directly or indirectly dependent upon claim 1.

According to the present invention, a method of operation of a LASER rangefinder for hand-held weapons is also provided as defined in claim 9 and preferably, but not necessarily, in any of the claims directly or indirectly dependent upon claim 9.

Finally, according to the present invention, an information technology product loadable in the memory of a processing unit of a LASER rangefinder is also provided to calculate, when implemented by the latter, the distance of a target, according to that defined in claim 10.

BRIEF DESCRIPTION OF THE DRAWINGS

The present invention will now be described with reference to the accompanying drawings, which illustrate a non-limitative embodiment, where:

- Figure 1 schematically shows some values of an electrical distance signal sampled by means of a method of calculation implemented on a known LASER rangefinder;
- Figure 2 schematically shows an example of the course of an electrical distance signal generated by the receiver stage of a known LASER rangefinder during a state of temporary saturation;
- Figure 3 schematically shows a hand-held weapon provided with a LASER rangefinder to calculate the distance between a target and the weapon, made according to the principles of the present invention;
- Figure 4 shows a block diagram of the LASER rangefinder shown in Figure 3;
- Figure 5 is a flowchart of the operations implemented by the method of operation of the LASER rangefinder shown in Figure 4; and
- Figure 6 shows the electrical distance signals obtained by simulating the method of operation of the rangefinder shown in Figure 5.

BEST MODE FOR CARRYING OUT THE INVENTION

The present invention is essentially based on the idea of:

- sampling the electrical distance signals to obtain a first vector containing a number of first sample values;
- filtering the first vector, through a digital low-pass filter, to determine a second vector containing second sample values, which are correlated to the variation in amplitude and/or frequency that is generated in the electrical distance signals following a state of saturation of the receiver stage;
- determining a third vector containing third sample values, which are calculated by subtracting the second sample values of the second vector from the corresponding first sample values of the first vector;
- calculate a standard deviation on the basis of a predetermined number of third sample values of the third vector;
- calculating a target detection threshold vector containing a plurality of detection thresholds based the on the standard deviation, the second sample values of the second vector and a predetermined coefficient;
- comparing each first sample value of the first vector with a corresponding detection threshold of the target detection threshold vector;
- calculating the target distance based on the result of the comparison.

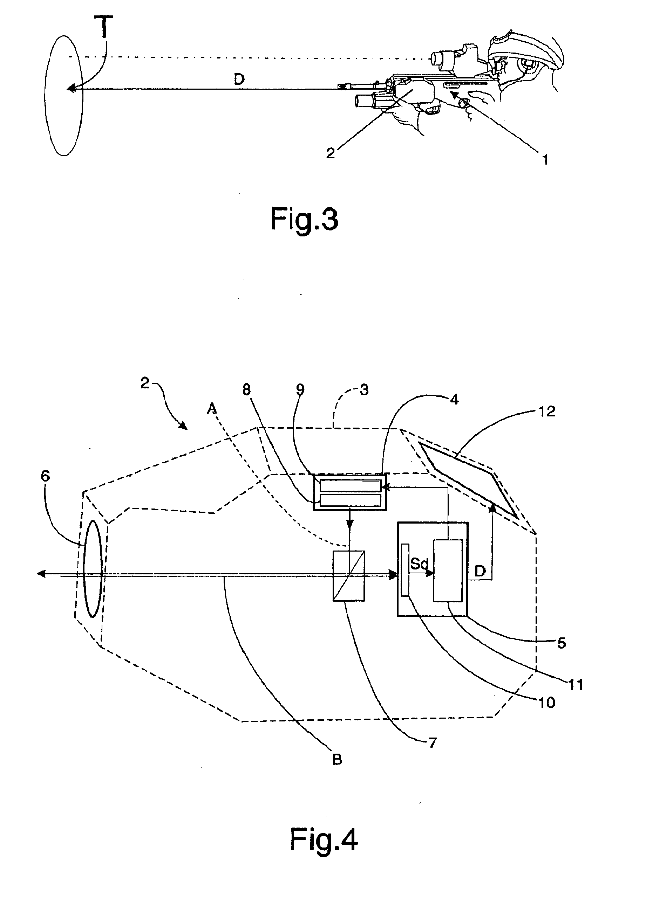

With reference to Figure 3, reference numeral 1 indicates, as a whole, a hand-held weapon, preferably corresponding to a grenade-launcher, provided with a LASER-type rangefinder 2, which is mounted on the hand-held weapon 1 in a stable but easily removable manner and is configured to calculate moment by moment the distance D between a target and the rangefinder 2 and, in consequence, between the target T and the weapon 1.

In the example schematically shown in Figure 4, the rangefinder 2 basically comprises: a protection frame 3 conveniently structured to be mounted in a stable but easily removable manner to the frame of the weapon 1; an emitter stage 4 arranged inside the frame 3 and configured to emit one or more LASER pulses along a direction A; a receiver stage 5 arranged inside the frame 3 and configured to receive one or more LASER pulses along a direction B intersecting direction A, in particular orthogonal to direction A; and an optical unit comprising a lens 6 arranged on the frame 3 such that a pulse that propagates along direction B passes through it, and a prism or optical splitter 7, which is positioned inside the frame 3 between the lens 6 and the emitter 4 and receiver 5 stages.

In particular, in the example shown in Figure 4, the optical splitter 7 is inserted between the lens 6 and the receiver stage 5 so as to have its opposite sides facing them, and is structured so as to receive each pulse emitted along direction A, deviate it to the lens 6 along direction B and so project the pulse towards the target T and, at the same time, pulses returning along direction B after being reflected off the target T pass through it so as to reach the receiver stage 5.

The emitter stage 4 comprises a LASER-type emitter device 8 provided, for example, with a LASER diode and an electronic control circuit 9 configured to control the emitter device 8 so as to emit one or more LASER pulses.

Regarding the receiver stage 5, this comprises an optoelectronic receiver device 10 provided, for example, with a photodiode, which is configured to receive the reflected LASER pulse and generate an electrical distance signal Sd in output correlated to the electrical pulse received, and a electronic processing unit 11, which is configured to receive the electrical distance signal Sd in input and process it, by means of a method of calculation (described in detail further on), to determine the distance D of the target T.

The electronic processing unit 11 is also configured to cooperate with the electronic control circuit 9 to pilot the emission of pulses by the emitter device 8.

In addition, the rangefinder 2 preferable, but not necessarily, comprises a display device 12, for example, a display placed on the frame 3 and configured to show the measured distance D to the user.

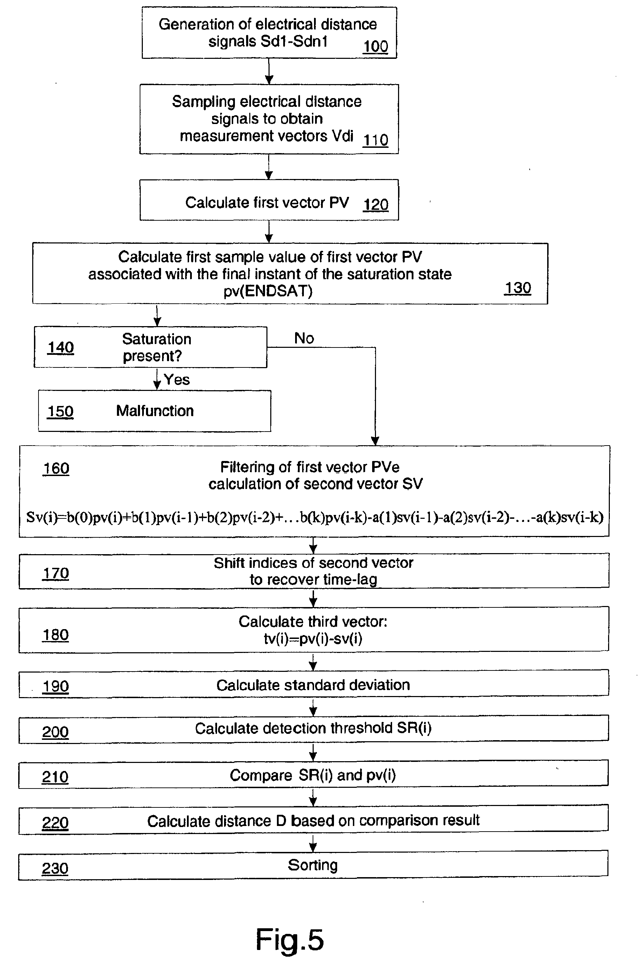

The flowchart shown in Figure 5 comprises the operating steps of the method implemented by the electronic processing unit 9 to calculate the distance D of the target with respect to the weapon 1.

The method provides that the electronic processing unit 11 controls, through the electronic control circuit 9, the emission of a number n1 of LASER pulses by the emitter device 8, in order to receive a number n1 of corresponding electrical distance signals $Sd_1...Sd_i...Sd_{n1}$ (i between 1 and n1) (block 100) from the optoelectronic receiver device 10,.

The method contemplates that the electronic processing unit 11 performs sampling on the electrical distance signals $Sd_i$ to obtain respective measurement vectors $Vd_1...Vd_i...Vd_{n1}$ (with i between 1 and n1) each comprising k sample values $vd_i(1)...vd_i(k)$ (block 110).

The method provides that the electronic processing unit 11 processes the n1 measurement vectors $vd_1...Vd_i...Vd_{n1}$ to calculate a first vector PV of sample values $pv(1)...pv(i)...pv(k)$, where each sample value $pv(i)$ is determined through the arithmetic mean of the corresponding sample values $vd_i(i)$ of the measurement vectors $Vd_1...Vd_i...Vd_{n1}$ (block 120). In the case in point, each sample value $pv(i)$ of the first vector PV is calculated by the method using the following relation:

c)

$$pv(i) = \frac{\sum_{y=1}^{y=n1} vd_i(y)}{n1}$$

The method contemplates that the electronic processing unit 11 identifies the sample values in the first vector PV associated with the saturation period (block 130), namely the sample values $pv(1),...,pv(ENDAST)$ where $pv(1)$ corresponds to the sample value associated with the first sampling instant, while $pv(ENDAST)$ corresponds to the sample value associated with the last sampling instant present in the saturation period.

In the case in point, the method contemplates that the electronic processing unit 11 determines the last sample value $pv(ENDSAT)$ on the basis of a comparison between the sample values $pv(i)$ of the first vector PV and a predetermined saturation threshold.

In the case where the electronic processing unit 11 determines that none of the sample values $pv(i)$ included in the first vector PV exceeds the predetermined saturation threshold (YES exit from block 140), then a malfunction condition of the rangefinder 2, in particular of the receiver stage 5 (block 150), is determined and preferably, but not necessarily, reported.

Otherwise (NO exit from block 140), the electronic processing unit 11 filters the first vector PV, limited to the sample values $pv(i)$ between i=ENDSAT and i=K, namely $pv(ENDSAT),...,pv(k)$, through a digital low-pass filter having a cutoff frequency approximately equal to the frequency of the pulse reflected by the target (block 160).

In particular, the frequency of the pulse reflected by the target is directly linked to the emission time of the emitter stage 4, which in the example shown is configured to emit a series of pulses at a frequency of approximately 10 KHz with each one having a duration of approximately 30 nsec (f1=33MHz).

In the case in point, in the example shown, the digital low-pass filter is configured to have a cutoff frequency approximately equal to ft=f1=33MHz.

Through the filtering, the electronic processing unit 11 determines a second vector SV containing sample values $sv(i)$ that are correlated to the oscillations introduced in the electrical distance signal at the end of the state of temporary saturation and do not contain the pulse reflected by the target.

Since, as highlighted in the example shown, the reflected pulse has a frequency f1=33 MHz and the period of the oscillations of electrical distance signal Sd due to leaving the saturated state have a frequency that is approximately ten times lower than frequency f1, the digital low-pass filter filters the frequency of the reflected pulse (equal to approximately 33 MHz) and lets the oscillations pass by. In this way, by taking the difference between the unfiltered distance signal and the distance signal provided in output from the digital low-pass filter, it is possible to obtain a distance signal devoid of "oscillating" disturbance components and therefore equivalent to that generated by a traditional LASER rangefinder, namely of the type specified in Fig. 1 where, as indicated above, it is possible to conveniently implement a standard calculation algorithm for calculating the distance.

In particular, to determine the second sample values $sv(i)$ of the second vector SV, the electronic processing unit 11 reiterates the below-specified equation d), starting from i=ENDSAT to i=k.

In detail, the electronic processing unit 11 filters, through a Butterworth filter or similar filter, each sample value pvi of the first vector PV through the following equation:

$$\text{d) } sv(i)=b(0)pv(i)+b(1)pv(i-1)+b(2)pv(i-2)+\ldots b(k)pv(i-k)-a(1)sv(i-1)-a(2)sv(i-2)-\ldots- a(k)sv(i-k);$$

where b(i) and a(i) are the coefficients of the Butterworth filter.

At this point, the method contemplates that the electronic processing unit 11 implements a shift operation on the indices of the second vector SV so as to recover the time lag, or phase loss, introduced into the signal by the filtering (block 170).

It is opportune to clarify that the distance signal provided in output from the digital low-pass filter is subtracted from the received distance signal so as to obtain a signal that only contains the high-frequency contribution associated with target reflection and measurement noise. To subtract the two signals correctly, it is necessary that there is only a difference in the high-frequency amplitudes and no time lag between the acquired distance signal and the filtered one.

As all the characteristics of the digital low-pass filter are known, including the phase loss, the latter can be compensated by shifting the filtered distance signal by a number of samples, NCRF, equal to the phase loss introduced by the filter.

In the case in point, the electronic processing unit 11 performs the following operation:

e) pv(i-NCRF)=pv(i), where NCRF is the number of samples necessary for recovering the phase delay introduced by the low-pass filter.

The method contemplates that the electronic processing unit 11 calculates a third vector TV comprising k sample values tv(i) by subtracting the k sample values sv(i) of the second vector SV from the corresponding k sample values pv(i) of the first vector PV (block 180).

The method contemplates that the electronic processing unit 11 calculates the standard deviation $\sigma$ of the noise of the third vector TV on the basis of a predetermined number of sample values tvi of the vector itself, using the following relation (block 190):

f)

$$\sigma(i) = \sqrt{\frac{\sum_{j=i-21}^{i-6}(TV(j)-TVm)^2}{21-6+1}}$$

where j defines the number of the sample where the interval for calculating signal noise begins, while $TV_m$ is the mean value of the signal calculated over the interval considered.

The method contemplates that the electronic processing unit 11 calculates a target detection threshold vector SR containing a plurality of detection thresholds SR(i) based on the standard deviation ($\sigma$), the second sample values sv(i) of the second vector (SV) and a predetermined coefficient ($\alpha$(i)).

In particular the method contemplates that the electronic processing unit 11 calculates a detection threshold SR(i) for each second sample value sv(i), using the following relation (block 200):

$$\text{g) } SR(i) = \sigma(i) \cdot \alpha(i) + sv(i)$$

where $\alpha$(i) is a coefficient preferably having the following values:

a value of 100 for i<60, or rather for nearby targets;
a variable value with a square law running from 100 to 8 when i varies between 60 and 219;

and a value of 8 for i equal to or greater than 220.

At this point, the method contemplates that the electronic processing unit 11 checks if the following relation (block 210) holds for i between 1 and k:

$$h) \; pv(i) > SR(i)$$

In other words, the electronic processing unit 11 checks each first sample value pvi to see if it is greater than the detection threshold SR(i) and, if so, identifies the position of the target based on the index i of the sample value that satisfies relation h).

At this point, assuming that the index of the sample value pvi of the first vector PV that satisfies relation h) is index k, the electronic processing unit 9 calculates the target distance D using the following relation:

$$i) \; D = k * GT$$

where GT is a time/distance conversion coefficient based of the known velocity of the LASER pulse (block 220).

Finally, the electronic processing unit 11 performs sorting on the distances based on the value of the signal/noise ratio for any multiple targets so as to display, in such cases, the distances of a number of targets (block 230).

In particular, the electronic processing unit 11 implements sorting of the distances based on the signal to noise ratio in a manner such that the first distance corresponds to the reflected pulse having the most energy, namely the pulse reflected by the target having a larger reflective surface.

Figure 6 shows an example of the acquisition of the distance signal PV received by the LASER rangefinder 1 during some field tests where the above-described algorithm has been applied through the "MATLAB" mathematical simulation program, and in which some intermediate working-out is also highlighted, i.e. the vectors SV and TV. In particular, the simulation was carried out by emitting n1=256 pulses with each emission lasting approximately 40 nanoseconds and an emission/reception frequency of the pulses of approximately 10 KHz.

In particular, the first PV, second SV and third TV vectors associated with the electrical distance signal are visible in Figure 6. In the case in point, the absence of the state of saturation and the strong reduction in oscillation obtained in the third vector thanks to the operations performed with the method is evident.

Regarding that described above, it is opportune to specify that the method of operation shown in Figure 5 can advantageously correspond to a computer program that can be loaded into the memory of an electronic device, in particular the electronic processing unit, and is designed to ensure that when executed by the electronic processing unit 9, the latter functions according to the steps provided by the method.

The above-described LASER rangefinder has the technical advantage of correctly calculating the target distance even in the presence of the state of saturation of the receiver stage without the need for increasing the overall measurement time, this latter situation being unacceptable for hand-held weapons where it is required to provide the measurement with extreme rapidity.

The above-described LASER rangefinder enables bulk and weight to be kept down by using just one optical channel.

In general, saving an optical path enables recurrent production costs to be contained.

Finally, it is understood that changes and modifications may be made to the rangefinder and to the method of operation without leaving the scope of protection of the present invention defined in the attached claims.

## Claims

1. A LASER rangefinder (2) configured to determine the distance (D) of a target, comprising:

   - emitting means (4) operable to emit LASER pulses along a first direction (A);
   - receiving means (5) operable to receive LASER pulses reflected by said target along a second direction (B) intersecting said first direction (A) and generate an electrical distance signal (SED) based on each LASER pulse received;
   - optical means (7) operable to receive the LASER pulses emitted along said first direction (A) and deflect said LASER pulses along said second direction (B);
   - processing means (11) configured to process said electrical distance signals (Sdi) to calculate said distance (D); said rangefinder being **characterized in that** said processing means (11) are further configured to:
- sample said electrical distance signals (Sdi) so as to obtain a first vector (PV) containing a number (K) of first sample values (pv(i));
- filter the first vector (PV), through a digital low-pass filter, so as to determine a second vector (SV) containing second sample values (sv(i)), which are correlated to the variation in amplitude and/or frequency that is generated in said electrical distance signals (Sdi) following a state of saturation of said receiving means (5);
- determine a third vector (TV) containing third sample values (tv(i)), which are calculated by subtracting the second sample values (sv(i)) of said second vector (SV) from the corresponding first sample values (pv(i)) of said first vector (PV);
- calculate a standard deviation ($\sigma$) on the basis of a predetermined number of said third sample values (tv(i)) of said third vector (TV);
- calculate a target detection threshold vector (SR) containing a plurality of detection thresholds (SR(i)) based on said standard deviation ($\sigma$), said second sample values (sv(i)) of said second vector (SV) and a predetermined coefficient ($\alpha(i)$);
- compare each first sample value (pv(i)) of the first vector (PV) with a corresponding detection threshold (SR(i)) of said target detection threshold vector (SR);
- calculate the target distance (D) based on the result of said comparison.

2. A rangefinder according to claim 1, wherein said processing means (11) are configured to filter said first vector (PV) through a Butterworth filter having a cutoff frequency approximately equal to the pulse reflected by the target.

3. A rangefinder according to claim 2, wherein said processing means (11) are configured to filter each first sample value (pv(i)) of the first vector (PV) to determine a second sample value (sv(i)) of the second vector (SV) through the following equation:

$$sv(i)=b(0)pv(i)+b(1)pv(i-1)+b(2)pv(i-2)+\ldots b(k)pv(i-k)-$$
$$a(1)sv(i-1)-a(2)sv(i-2)-\ldots- a(k)sv(i-k);$$

where b(i) and a(i) are the coefficients of the Butterworth filter.

4. A rangefinder according to claim 3, wherein said emitting means (4) emit a number (n1) of pulses in a manner to cause said receiving means (3) to generate a number (n1) of corresponding electrical distance signals (Sd1...Sdi...Sdn1), said processing means (11) being configured to sample the electrical distance signals (Sdi) to provide respective measurement vectors (Vd1...Vdi...Vdn1) each comprising a given number (k) of sample values (vdi(1)...vdi(k)) and process the measurement vectors (Vd1...Vdi...Vdn1) so as to calculate said first vector (PV) of sample values (pv(1)...pv(i)...pv(k)), wherein each sample value (pv(i)) is determined through the arithmetic mean of the corresponding sample values (vdi(i)) of said measurement vectors (Vd1...Vdi...Vdn1).

5. A hand-held weapon (1) comprising a LASER rangefinder (2) according to claim 1.

6. A hand-held weapon according to claim 5, wherein said processing means (11) are configured to filter said first vector (PV) through a Butterworth filter having a cutoff frequency above equal to the frequency of the pulse reflected by the target.

7. A hand-held weapon according to claim 6, wherein said processing means (11) are configured to filter each first sample value (pv(i)) of the first vector (PV) to determine a second sample value (sv(i)) of the second vector (SV) through the following equation:

$$sv(i)=b(0)pv(i)+b(1)pv(i-1)+b(2)pv(i-2)+\ldots b(k)pv(i-k)-$$
$$a(1)sv(i-1)-a(2)sv(i-2)-\ldots- a(k)sv(i-k);$$

where b(i) and a(i) are the coefficients of the Butterworth filter.

8. A hand-held weapon according to claim 7, wherein said emitting means (4) emit a number (n1) of pulses to cause said receiving means (5) to generate a number (n1) of corresponding electrical distance signals (Sd1..:Sdi...Sdn1), said processing means (11) being configured to sample said electrical distance signals (Sdi) so as to provide respective measurement vectors (Vd1...Vdi...Vdn1) each comprising a given number (k) of sample values (vdi(1)...vdi(k)) and process the measurement vectors (Vd1...Vdi...Vdn1) to calculate said first vector (PV) of sample values (pv(1)...pv(i)...pv(k)), wherein each sample value (pv(i)) is determined through the arithmetic mean of the corresponding sample values (vdi(i)) of said measurement vectors (Vd1...Vdi...Vdn1).

9. A method of operation for a LASER rangefinder (2) able to determine the distance (D) of a target, wherein said rangefinder (2) comprises:

- emitting means (4) operable to emit LASER pulses along a first direction (A);
- receiving means (5) operable to receive LASER pulses reflected by said target along a second direction (B) intersecting said first direction (A) and generate an electrical distance signal (SED) based on each LASER pulse received;
- optical means (7) operable to receive the LASER pulses emitted along said first direction (A) and deflect said LASER pulses along said second direction (B);

said method comprising the step of processing said electrical distance signals (Sdi) to calculate said distance (D) and being **characterized in that** said method further comprises the steps of:
- sampling said electrical distance signals (Sdi) to provide a first vector (PV) containing a number (K) of first sample values (pv(i));
- filtering the first vector (PV), through a digital low-pass filter, to determine a second vector (SV) containing second sample values (sv(i)), which are correlated to the variation in amplitude and/or frequency that is generated in said electrical distance signals (Sdi) following a state of saturation of said receiving means (5);
- determining a third vector (TV) containing third sample values (tv(i), which are calculated by subtracting the second sample values (sv(i)) of said second vector (SV) from the corresponding first sample values (pv(i)) of said first vector (PV) ;
- calculating a standard deviation (σ) based on a predetermined number of said third sample values (tv(i)) of said third vector (TV);
- calculating a target detection threshold vector (SR) containing a plurality of detection thresholds (SR(i)) based on said standard deviation (σ), said second sample values (sv(i)) of said second vector (SV) and a predetermined coefficient (α(i));
- comparing each first sample value (pv(i)) of the first vector (PV) with a corresponding detection threshold (SR(i)) of said target detection threshold vector (SR);
- calculating the target distance (D) based on the result of said comparison.

10. An information technology product loadable in the memory of a processing unit (11) of a LASER rangefinder (2) and designed to implement, when executed by the processing unit (11), the method according to claim 9.

**Patentansprüche**

1. Laser-Entfernungsmesser (2), der konfiguriert ist, den Abstand (D) eines Ziels zu bestimmen, und umfasst:

- Sendemittel (4), die betreibbar sind, Laserimpulse längs einer ersten Richtung (A) auszusenden;
- Empfangsmittel (5), die betreibbar sind, Laserimpulse, die von dem Ziel längs einer zweiten Richtung (B), die die erste Richtung (A) schneidet, reflektiert werden, zu empfangen und anhand jedes empfangenen Laserimpulses ein elektrisches Abstandssignal (SED) zu erzeugen;
- optische Mittel (7), die betreibbar sind, die längs der ersten Richtung (A) gesendeten Laserimpulse zu empfangen und die Laserimpulse längs der zweiten Richtung (B) abzulenken;
- Verarbeitungsmittel (11), die konfiguriert sind, die elektrischen Abstandssignale (Sdi) zu verarbeiten, um den Abstand (D) zu berechnen;

wobei der Entfernungsmesser **dadurch gekennzeichnet ist, dass** die Verarbeitungsmittel (11) ferner konfiguriert sind:
- die elektrischen Abstandssignale (Sdi) abzutasten, um einen ersten Vektor (PV) zu erhalten, der eine Anzahl (K) erster Abtastwerte (pv(i)) enthält;
- den ersten Vektor (PV) mittels eines digitalen Tiefpassfilters zu filtern, um so einen zweiten Vektor (SV) zu bestimmen, der zweite Abtastwerte (sv(i)) enthält, die mit der Veränderung der Amplitude und/oder der Frequenz korreliert sind, die in den elektrischen Abstandssignalen (Sdi) als Folge eines Sättigungszustands der Empfangsmittel (5) erzeugt wird;
- einen dritten Vektor (TV) zu bestimmen, der dritte Abtastwerte (tv(i)) enthält die durch Subtrahieren der zweiten Abtastwerte (sv(i)) des zweiten Vektors (SV) von den entsprechenden ersten Abtastwerten (pv(i)) des Vektors (PV) berechnet werden;
- eine Standardabweichung ($\sigma$) anhand einer vorgegebenen Anzahl der dritten Abtastwerte (tv(i)) des dritten Vektors (TV) zu berechnen;
- einen Zieldetektionsschwellenvektor (SR), der mehrere Detektionsschwellenwerte (SR(i)) enthält, anhand der Standardabweichung ($\sigma$), der zweiten Abtastwerte (sv(i)) des zweiten Vektors (SV) und eines vorgegebenen Koeffizienten ($\alpha(i)$) zu berechnen;
- jeden ersten Abtastwert (pv(i)) des ersten Vektors (PV) mit einem entsprechenden Detektionsschwellenwert (SR(i)) des Zieldetektionsschwellenvektors (SR) zu vergleichen;
- den Zielabstand (D) anhand des Ergebnisses des Vergleichs zu berechnen.

2. Entfernungsmesser nach Anspruch 1, wobei die Verarbeitungsmittel (11) konfiguriert sind, den ersten Vektor (PV) durch ein Butterworth-Filter mit einer Kappungsfrequenz, die ungefähr gleich dem durch das Ziel reflektierten Impuls ist, zu filtern.

3. Entfernungsmesser nach Anspruch 2, wobei die Verarbeitungsmittel (11) konfiguriert sind, jeden ersten Abtastwert (pv(i)) des ersten Vektors (PV) zu filtern, um einen zweiten Abtastwert (sv(i)) des zweiten Vektors (SV) anhand der folgenden Gleichung zu bestimmen:

$$sv(i)=b(0)\ pv(i) + b(1)\ pv(i-1) + b(2)\ pv(i-2) +...+ b(k)\ pv(i-k) - a(1)\ sv(i-1) - a(2)\ sv(i-2) -...- a(k)\ sv(i-k);$$

wobei b(i) und a(i) die Koeffizienten des Butterworth-Filters sind.

4. Entfernungsmesser nach Anspruch 3, wobei die Sendemittel (4) eine Anzahl (n1) von Impulsen auf eine Weise aussenden, um die Empfangsmittel (3) dazu zu veranlassen, eine Anzahl (n1) entsprechender elektrischer Abstandssignal (Sd1 ... Sdi ... Sdn1) zu erzeugen, wobei die Verarbeitungsmittel (11) konfiguriert sind, die elektrischen Abstandssignale (Sdi) abzutasten, um entsprechende Messvektoren (Vd1 ... Vdi ... Vdn1) bereitzustellen, wovon jeder eine gegebene Anzahl (k) von Abtastwerten (vdi(1) ... vdi(k)) enthält, und die Messvektoren (Vd1 ... Vdi ... Vdn1) zu verarbeiten, um den ersten Vektor (PV) von Abtastwerten (pv(1) ... pv(i) ... pv(k)) zu berechnen, wobei jeder Abtastwert (pv(i)) durch das arithmetische Mittel der entsprechenden Abtastwerte (vdi(i)) der Messvektoren (Vd1 ... Vdi ... Vdn1) bestimmt ist.

5. Tragbare Waffe (1), die einen Laser-Entfernungsmesser (2) nach Anspruch 1 umfasst.

6. Tragbare Waffe nach Anspruch 5, wobei die Verarbeitungsmittel (11) konfiguriert sind, den ersten Vektor (PV) durch ein Butterworth-Filter, das eine Kappungsfrequenz besitzt, die größer oder gleich der Frequenz des von dem Ziel reflektierten Impulses ist, besitzt.

7. Tragbare Waffe nach Anspruch 6, wobei die Verarbeitungsmittel (11) konfiguriert sind, um jeden ersten Abtastwert (pv(i)) des ersten Vektors (PV) zu filtern, um einen zweiten Abtastwert (sv(i)) des zweiten Vektors (SV) anhand der folgenden Gleichung zu bestimmen:

$$sv(i)=b(0)\ pv(i) + b(1)\ pv(i-1) + b(2)\ pv(i-2) +...+ b(k)\ pv(i-k) - a(1)\ sv(i-1) - a(2)\ sv(i-2) -...- a(k)\ sv(i-k);$$

wobei b(i) und a(i) die Koeffizienten des Butterworth-Filters sind.

8. Tragbare Waffe nach Anspruch 7, wobei die Sendemittel (4) eine Anzahl (n1 von Impulsen auf eine Weise aussenden, um die Empfangsmittel (3) dazu zu veranlassen, eine Anzahl (n1 entsprechender elektrischer Abstandssignal (Sd1 ... Sdi ... Sdn1) zu erzeugen, wobei die Verarbeitungsmittel (11) konfiguriert sind, die elektrischen Abstandssignale

**EP 2 585 788 B1**

(Sdi) abzutasten, um entsprechende Messvektoren (Vd1 ... Vdi ... Vdn1) bereitzustellen, wovon jeder eine gegebene Anzahl (k) von Abtastwerten (vdi(1) ... vdi(k)) enthält, und die Messvektoren (Vd1 ... Vdi ... Vdn1) zu verarbeiten, um den ersten Vektor (PV) von Abtastwerten (pv(1) ... pv(i) ... pv(k)) zu berechnen, wobei jeder Abtastwert (pv(i)) durch das arithmetische Mittel der entsprechenden Abtastwerte (vdi(i)) der Messvektoren (Vd1 ... Vdi ... Vdn1) bestimmt ist.

9. Verfahren zum Betreiben eines Laser-Entfernungsmessers (2), der den Abstand (D) eines Ziels bestimmen kann, wobei der Entfernungsmesser (2) Folgendes umfasst:

 - Sendemittel (4), die betreibbar sind, Laserimpulse längs einer ersten Richtung (A) auszusenden;
 - Empfangsmittel (5), die betreibbar sind, Laserimpulse, die von dem Ziel längs einer zweiten Richtung (B), die die erste Richtung (A) schneidet, reflektiert werden, zu empfangen und ein elektrisches Abstandssignal (SED) anhand jedes empfangenen Laserimpulses zu erzeugen;
 - optische Mittel (7), die betreibbar sind, die längs der ersten Richtung (A) gesendeten Laserimpulse zu empfangen und die Laserimpulse längs der zweiten Richtung (B) abzulenken;
 wobei das Verfahren den Schritt des Verarbeitens der elektrischen Abstandssignale (Sdi) umfasst, um den Abstand (D) zu berechnen und **dadurch gekennzeichnet ist, dass** das Verfahren ferner die folgenden Schritte umfasst:
 - Abtasten der elektrischen Abstandssignale (Sdi), um einen ersten Vektor (PV), der eine Anzahl (K) erster Abtastwerte (pv(i)) enthält, bereitzustellen;
 - Filtern des ersten Vektors (PV) durch ein digitales Tiefpassfilter, um einen zweiten Vektor (SV) zu bestimmen, der zweite Abtastwerte (sv(i)) enthält, die mit der Veränderung der Amplitude und/oder der Frequenz korreliert sind, die in den elektrischen Abstandssignalen (Sdi) als Folge eines Sättigungszustands der Empfangsmittel (5) erzeugt wird;
 - Bestimmen eines dritten Vektors (TV), der dritte Abtastwerte (tv(i)) enthält, die durch Subtrahieren der zweiten Abtastwerte (sv(i)) des zweiten Vektors (SV) von den entsprechenden ersten Abtastwerten (pv(i)) des ersten Vektors (PV) berechnet werden;
 - Berechnen einer Standardabweichung ($\sigma$) anhand einer vorgegebenen Anzahl der dritten Abtastwerte (tv(i)) des dritten Vektors (TV);
 - Berechnen eines Zieldetektionsschwellenvektors (SR), der mehrere Detektionsschwellenwerte (SR(i)) enthält, anhand der Standardabweichung ($\sigma$), der zweiten Abtastwerte (sv(i)) des zweiten Vektors (SV) und eines vorgegebenen Koeffizienten ($\alpha$(i));
 - Vergleichen jedes ersten Abtastwerts (pv(i)) des ersten Vektors (PV) mit einem entsprechenden Detektionsschwellenwert (SR(i)) des Zieldetektionsschwellenvektors (SR);
 - Berechnen des Zielabstands (D) anhand des Ergebnisses des Vergleichs.

10. Informationstechnisches Produkt, das in den Speicher einer Verarbeitungseinheit (11) eines Laser-Entfernungsmessers (2) geladen werden kann und entworfen ist, dann, wenn es von der Verarbeitungseinheit (11) ausgeführt wird, das Verfahren nach Anspruch 9 zu implementieren.

**Revendications**

1. Télémètre à LASER (2) configuré pour déterminer la distance (D) d'une cible, comprenant :

 - des moyens émetteurs (4) utilisables pour émettre des impulsions LASER le long d'une première direction (A) ;
 - des moyens récepteurs (5) utilisables pour recevoir des impulsions LASER réfléchies par ladite cible le long d'une seconde direction (B) croisant ladite première direction (A) et générer un signal télémétrique électrique (SED) en fonction de chaque impulsion LASER reçue ;
 - des moyens optiques (7) utilisables pour recevoir les impulsions LASER émises le long de ladite première direction (A) et défléchir lesdites impulsions LASER le long de ladite seconde direction (B) ;
 - des moyens de traitement (11) configurés pour traiter lesdits signaux télémétriques électriques (Sdi) pour calculer ladite distance (D) ;
 ledit télémètre étant **caractérisé en ce que** lesdits moyens de traitement (11) sont en outre configurés pour :

 - échantillonner lesdits signaux télémétriques électriques (Sdi) afin d'obtenir un premier vecteur (PV) contenant un nombre (K) de premières valeurs d'échantillon (pv(i)) ;
 - filtrer le premier vecteur (PV), par l'intermédiaire d'un filtre passe-bas, afin de déterminer un deuxième vecteur (SV) contenant des deuxièmes valeurs d'échantillon (sv(i)), qui sont corrélées à la variation d'amplitude et/ou de fréquence qui est générée dans lesdits signaux télémétriques électriques (Sdi) suivant un état de saturation desdits moyens récepteurs (5) ;
- déterminer un troisième vecteur (TV) contenant des troisièmes valeurs d'échantillon (tv(i)), qui sont calculées en soustrayant les deuxièmes valeurs d'échantillon (sv(i)) dudit deuxième vecteur (SV) à partir des premières valeurs d'échantillon correspondantes (pv(i)) dudit premier vecteur (PV) ;
- calculer un écart type ($\sigma$) en fonction d'un nombre prédéterminé desdites troisièmes valeurs d'échantillon (tv(i)) dudit troisième vecteur (TV) ;
- calculer un vecteur de seuil de détection de cible (SR) contenant une pluralité de seuils de détection (SR(i)) en fonction dudit écart type ($\sigma$), desdites deuxièmes valeurs d'échantillon (sv(i)) dudit deuxième vecteur (SV) et d'un coefficient prédéterminé ($\alpha$(i)) ;
- comparer chaque première valeur d'échantillon (pv(i)) du premier vecteur (PV) à un seuil de détection correspondant (SR(i)) dudit vecteur de seuil de détection de cible (SR) ;
- calculer la distance de cible (D) en fonction du résultat de ladite comparaison.

2. Télémètre selon la revendication 1, dans lequel lesdits moyens de traitement (11) sont configurés pour filtrer ledit premier vecteur (PV) par l'intermédiaire d'un filtre de Butterworth possédant une fréquence de coupure approximativement égale à l'impulsion réfléchie par la cible.

3. Télémètre selon la revendication 2, dans lequel lesdits moyens de traitement (11) sont configurés pour filtrer chaque première valeur d'échantillon (pv(i)) du premier vecteur(PV) pour déterminer une deuxième valeur d'échantillon (sv(i)) du deuxième vecteur (SV) par l'intermédiaire de l'équation suivante :

$$sv(i)=b(0)pv(i)+b(1)pv(i-1)+b(2)pv(i-2)+...b(k)pv(i-k)-$$
$$a(1)sv(i-1)-a(2)sv(i-2)-...-a(k)sv(i-k);$$

où b(i) et a(i) sont les coefficients du filtre de Butterworth.

4. Télémètre selon la revendication 3, dans lequel lesdits moyens émetteurs (4) émettent un nombre (n1) d'impulsions de manière à faire en sorte que lesdits moyens récepteurs (3) génèrent un nombre (n1) de signaux télémétriques électriques correspondants (Sd1...Sdi...Sdn1),
lesdits moyens de traitement (11) étant configurés pour échantillonner les signaux télémétriques électriques (Sdi) pour fournir des vecteurs de mesure respectifs (Vd1...Vdi...Vdn1) comprenant chacun un nombre donné (k) de valeurs d'échantillon (vdi(1)...vdi(k)) et traiter les vecteurs de mesure (Vd1...Vdi...Vdn1) afin de calculer ledit premier vecteur (PV) de valeurs d'échantillon (pv(1)...pv(i)...pv(k)), dans lequel chaque valeur d'échantillon (pv(i)) est déterminée par l'intermédiaire de la moyenne arithmétique desdites valeurs d'échantillon correspondantes (vdi(i)) desdits vecteurs de mesure (Vd1...Vdi...Vdn1).

5. Arme portative (1) comprenant un télémètre à LASER (2) selon la revendication 1.

6. Arme portative selon la revendication 5, dans laquelle lesdits moyens de traitement (11) sont configurés pour filtrer ledit premier vecteur (PV) par l'intermédiaire d'un filtre de Butterworth possédant une fréquence de coupure supérieure égale à la fréquence de l'impulsion réfléchie par la cible.

7. Arme portative selon la revendication 6, dans laquelle lesdits moyens de traitement (11) sont configurés pour filtrer chaque première valeur d'échantillon (pv(i)) du premier vecteur (PV) pour déterminer une deuxième valeur d'échantillon (sv(i)) du deuxième vecteur (SV) par l'intermédiaire de l'équation suivante :

$$sv(i)=b(0)pv(i)+b(1)pv(i-1)+b(2)pv(i-2)+...b(k)pv(i-k)-$$
$$a(1)sv(i-1)-a(2)sv(i-2)-...-a(k)sv(i-k);$$

où b(i) et a(i) sont les coefficients du filtre de Butterworth.

8. Arme portative selon la revendication 7, dans laquelle lesdits moyens émetteurs (4) émettent un nombre (n1) d'impulsions pour faire en sorte que lesdits moyens récepteurs (5) génèrent un nombre (n1) de signaux télémétriques électriques correspondants (Sd1...Sdi...Sdn1), lesdits moyens de traitement (11) étant configurés pour échantillonner lesdits signaux télémétriques électriques (Sdi) afin de fournir des vecteurs de mesure respectifs (Vd1...Vdi...Vdn1) comprenant chacun un nombre donné (k) de valeurs d'échantillon (vdi(1)...vdi(k)) et traiter les vecteurs de mesure (Vd1...Vdi...Vdn1) pour calculer ledit premier vecteur (PV) de valeurs d'échantillon (pv(1)...pv(i)...pv(k)), dans laquelle chaque valeur d'échantillon (pv(i)) est déterminée par l'intermédiaire de la moyenne arithmétique desdites valeurs d'échantillon correspondantes (vdi(i)) desdits vecteurs de mesure (Vd1...Vdi...Vdn1).

9. Méthode de fonctionnement pour un télémètre à LASER (2) capable de déterminer la distance (D) d'une cible, dans laquelle ledit télémètre (2) comprend :

   - des moyens émetteurs (4) utilisables pour émettre des impulsions LASER le long d'une première direction (A) ;
   - des moyens récepteurs (5) utilisables pour recevoir des impulsions LASER réfléchies par ladite cible le long d'une seconde direction (B) croisant ladite première direction (A) et générer un signal télémétrique électrique (SED) en fonction de chaque impulsion LASER reçue ;
   - des moyens optiques (7) utilisables pour recevoir les impulsions LASER émises le long de ladite première direction (A) et défléchir lesdites impulsions LASER le long de ladite seconde direction (B) ;
   ladite méthode comprenant l'étape du traitement desdits signaux télémétriques électriques (Sdi) pour calculer ladite distance (D) et étant **caractérisée en ce que** ladite méthode comprend en outre les étapes de :
   - l'échantillonnage desdits signaux télémétriques électriques (Sdi) pour fournir un premier vecteur (PV) contenant un nombre (K) de premières valeurs d'échantillon (pv(i)) ;
   - le filtrage du premier vecteur (PV), par l'intermédiaire d'un filtre passe-bas, pour déterminer un deuxième vecteur (SV) contenant des deuxièmes valeurs d'échantillon (sv(i)), qui sont corrélées à la variation d'amplitude et/ou de fréquence qui est générée dans lesdits signaux télémétriques électriques (Sdi) suivant un état de saturation desdits moyens récepteurs (5) ;
   - la détermination d'un troisième vecteur (TV) contenant des troisièmes valeurs d'échantillon (tv(i), qui sont calculées en soustrayant les deuxièmes valeurs d'échantillon (sv(i)) dudit deuxième vecteur (SV) à partir des premières valeurs d'échantillon correspondantes (pv(i)) dudit premier vecteur (PV) ;
   - le calcul d'un écart type ($\sigma$) en fonction d'un nombre prédéterminé desdites troisièmes valeurs d'échantillon (tv(i)) dudit troisième vecteur (TV) ;
   - le calcul d'un vecteur de seuil de détection de cible (SR) contenant une pluralité de seuils de détection (SR(i)) en fonction dudit écart type ($\sigma$), desdites deuxièmes valeurs d'échantillon (sv(i)) dudit deuxième vecteur (SV) et d'un coefficient prédéterminé ($\alpha$(i)) ;
   - la comparaison de chaque première valeur d'échantillon (pv(i)) du premier vecteur (PV) à un seuil de détection correspondant (SR(i)) dudit vecteur de seuil de détection de cible (SR) ;
   - le calcul de la distance de cible (D) en fonction du résultat de ladite comparaison.

10. Produit informatique chargeable dans la mémoire d'une unité de traitement (11) d'un télémètre à LASER (2) et conçu pour implémenter, lorsqu'il est exécuté par l'unité de traitement (11), la méthode selon la revendication 9.

Fig.1

Fig.2

Fig.6

Fig.3

Fig.4

| 100 | Generation of electrical distance signals Sd1-Sdn1 |
|---|---|

| 110 | Sampling electrical distance signals to obtain measurement vectors Vdi |
|---|---|

| 120 | Calculate first vector PV |
|---|---|

| 130 | Calculate first sample value of first vector PV associated with the final instant of the saturation state pv(ENDSAT) |
|---|---|

| 140 | Saturation present? |
|---|---|

No

Yes

| 150 | Malfunction |
|---|---|

| 160 | Filtering of first vector PVe calculation of second vector SV<br><br>$Sv(i)=b(0)pv(i)+b(1)pv(i-1)+b(2)pv(i-2)+...b(k)pv(i-k)-a(1)sv(i-1)-a(2)sv(i-2)-...-a(k)sv(i-k)$ |
|---|---|

| 170 | Shift indices of second vector to recover time-lag |
|---|---|

| 180 | Calculate third vector:<br>$tv(i)=pv(i)-sv(i)$ |
|---|---|

| 190 | Calculate standard deviation |
|---|---|

| 200 | Calculate detection threshold SR(i) |
|---|---|

| 210 | Compare SR(i) and pv(i) |
|---|---|

| 220 | Calculate distance D based on comparison result |
|---|---|

| 230 | Sorting |
|---|---|

# Fig.5

**EP 2 585 788 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0077540 A1